## Europäisches Patentamt

## European Patent Office

## Office européen des brevets

(19)

(11) Veröffentlichungsnummer: **0 219 567**
**B1**

(12) **EUROPÄISCHE PATENTSCHRIFT**

(45) Veröffentlichungstag der Patentschrift:
**17.01.90**

(51) Int. Cl.⁴: **F16F 1/36**

(21) Anmeldenummer: **85113408.0**

(22) Anmeldetag: **22.10.85**

(54) **Auflager.**

(43) Veröffentlichungstag der Anmeldung:
**29.04.87 Patentblatt 87/18**

(45) Bekanntmachung des Hinweises auf die Patenterteilung:
**17.01.90 Patentblatt 90/3**

(84) Benannte Vertragsstaaten:
**AT BE CH DE FR GB IT LI NL SE**

(56) Entgegenhaltungen:
**CH-A- 454 202**
**DE-U- 8 104 814**
**FR-A- 1 272 175**
**US-A- 3 924 907**

(73) Patentinhaber: **Antonijevic, Oleg, Dipl.-Ing.,**
**Waldgartenstrasse 75, D-8000 München 70(DE)**

(72) Erfinder: **Antonijevic, Oleg, Dipl.-Ing.,**
**Waldgartenstrasse 75, D-8000 München 70(DE)**
Erfinder: **Wolf, Franz-Josef, Sprudelallee 19, D-6483 Bad**
**Soden-Salmünster(DE)**

(74) Vertreter: **Jaeger, Klaus, Dipl.-Chem. Dr. et al, Jaeger,**
**Steffens & Köster Patentanwälte Pippinplatz 4a,**
**D-8035 München-Gauting(DE)**

ACTORUM AG

## Beschreibung

Die Erfindung betrifft ein Auflager aus einem zur Schubversteifung bewehrten Elastomerblock der im Oberbegriff des Anspruchs 1 genannten Art.

Solche Gummilager, vgl. z.B. die US-A 3 924 907, dienen in den verschiedensten Bereichen der Technik als Auflager, so beispielsweise zum Lagern kleinerer Geräte und Apparate, zum Lagern von Kraftfahrzeugkarosserieteilen, zur Gleiskörperlagerung und zur Lagerung von Brücken ebenso wie zur Lagerung von Hochhäusern in erdbebengefährdeten Gebieten.

Charakteristisch ist für solche Gummilager, daß sie in Druckrichtung eine ausreichend gute Steifigkeit aufweisen, während sie gleichzeitig eine nur geringe Schubsteifigkeit besitzen. Zudem kann die Drucksteifigkeit durch eine Veränderung der geometrischen Form des Auflagers und/oder durch Einvulkanisieren von Zwischenblechen zur Erhöhung des Formfaktors ohne Schwierigkeiten in großen Bereichen veränderlich eingestellt werden, und zwar unabhängig von den Werkstoffdaten des jeweils eingesetzten Elastomers und der Schubsteifigkeit, während die Schubsteifigkeit nur durch eine Veränderung der Härte des Elastomers, also durch die Veränderung eines Werkstoffparameters, und damit unter Beeinflussung auch der Drucksteifigkeit verändert werden kann.

Zur Verbesserung der Schubsteifigkeit und Dämpfung in Querrichtung ist es aus der Praxis bekannt, ein solches Lager mit einem oder mehreren durchgehenden bleigefüllten Kanälen auszurüsten, die sich in Richtung der Auflast erstrecken.

Nachteilig an diesen Lagern ist die signifikante ungünstige Beeinflussung der Federkenndaten und Dämpfung in Druckrichtung.

Aus der FR-A 1 272 175 ist ein Lager bekannt, das zwei Platten besitzt, die zueinander parallel und auch parallel bezüglich der Auflast und dem Widerlager angeordnet sind. Auf den zueinander zeigenden Flächen dieser Platten ist jeweils ein Kissen aus einem elastischen Material angeordnet. Zwischen diesen beiden Kissen befinden sich mindestens zwei steife, identische und parallel zueinander angeordnete Körper, die mit ihren Enden gegen die Kissen anliegen. Die Oberfläche dieser Körper, entlang derer die Körper gegen die Kissen anliegen, sind so geformt, daß die genannten Körper eine Art Rollbewegung ausführen können. Durch dieses bekannte Lager wird erreicht, daß sich die Auflast und das Widerlager horizontal zueinander verschieben können, wobei der Abstand zueinander in etwa erhalten bleibt.

Auch mit diesem bekannten Lager ist es somit nicht möglich, die Schubsteifigkeit oder Dämpfung in Querrichtung bzw. in horizontaler Richtung zu verbessern. Ferner wird bei diesem bekannten Lager auch die Dämpfung in Druckrichtung ungünstig beeinflußt, wie das auch bei den bereits weiter oben geschilderten Lagern der Fall ist.

Angesichts dieses Standes der Technik liegt der Erfindung die Aufgabe zugrunde, ein Elastomerauflager der eingangs genannten Art zu schaffen, das ohne die Kenndaten der Federung und Dämpfung in Druckrichtung zu beeinflussen, eine freie Einstellbarkeit der Schubsteifigkeit ermöglicht.

Zur Lösung dieser Aufgabe weist ein Auflager der eingangs genannten Art die im kennzeichnenden Teil des Anspruchs 1 genannten Merkmale auf.

Mit anderen Worten, der Erfindung liegt der wesentliche Gedanke zugrunde, die Schubsteifigkeit eines Auflagers aus einem Elastomer, im einfachsten Fall also auch eines Gummipuffers, dadurch konstruktiv weitgehend beliebig gestaltend zu verbessern, daß in dem Elastomerblock des Auflagers ein biegefester oder biegesteifer Kern angeordnet ist, der biegefest und schubgesichert mit einer Bewehrungsbasisplatte, die im Elastomer einvulkanisiert ist, verbunden ist, wobei der starre Verbund aus Basisplatte und Kern so im Elastomerblock des Auflagers angeordnet ist, daß diese starre Struktur weder mit dem zu lagernden Lastteil noch mit dem Widerlager ungefedert kraftleitend, das heißt also unmittelbar ohne zwischenliegendes Elastomer, in Berührung gelangt. Dabei ist es prinzipiell von untergeordneter Bedeutung, ob die Außenränder der Basisplatte in den Seitenwandflächen des Elastomerblocks freiliegen oder sogar geringfügig über diesen überstehen, oder ob diese Außenkanten der Basisplatte rundum vollständig im Elastomerblock eingebettet und eingeschlossen sind. Insbesondere bei relativ dünner Ausbildung der Elastomerschicht zwischen der Oberfläche des Widerlagers und der Basisplatte wird jedoch die zuletzt genannte Ausgestaltung mit ringsum eingeschlossener Außenkante der Basisplatte vorzuziehen sein, um zu vermeiden, daß bei einem bestimmungsgemäßen Verkippen oder Verdrehen der Basisplatte unter Schubeinwirkung auf das Auflager eine der Außenkanten der Basisplatte doch in unbeabsichtigter Weise auf dem Widerlager zur Auflage kommt. Wenn die Außenkanten der Basisplatte vollständig vom Elastomer umschlossen sind, ist jedoch darauf zu achten, daß die Basisplatte zumindest in Richtung der einwirkenden Schubkraft ausreichend breit ausgebildet ist, um dem Kern im Elastomerblock die erforderliche "Standfestigkeit" zu verleihen, genauer gesagt, um dem Kern den erforderlichen Kippwiderstand aufzuprägen.

Durch die zwischen der Bewehrungsbasisplatte und dem Widerlager vorgesehene Elastomerschicht steht der Kern im Auflager nie absolut kippfest, sondern ist stets mit einer mehr oder minder großen elastisch abgefederten Verkippbarkeit ausgestattet. Die Federkennlinie dieser elastischen Verkippbarkeit des Kerns im Auflager hängt dabei primär und wesentlich von der Dicke der zwischen der Basisplatte und dem Widerlager ausgebildeten Elastomerschicht ab. Da die federelastische Verkippbarkeit des Kerns im Auflager jedoch ein wesentliches Bestimmungsmoment der Kennlinie der Schubsteifigkeit des Auflagers ist, kann also die Kennlinie der Schubsteifigkeit des Auflagers in einfacher Weise signifikant durch die Dicke der zwischen der Basisplatte und der Auflageroberfläche ausgebildeten Elastomerschicht modifiziert werden, und zwar mit der Maßgabe, daß die Schubsteifigkeit bei sonst unveränderten Lagermerkmalen umso größer wird und umso steiler ansteigt, je dünner diese Elastomerzwischenschicht zwischen Basisplatte und Widerlager ist.

Ein weiteres Mittel zur Beeinflussung des Verlaufs der Schubsteifigkeit des Auflagers liegt in der Wahl des Kernmaterials. Prinzipiell kann der Kern sowohl aus einem einheitlichen Werkstoff oder aus einem geeigneten Verbundwerkstoff bestehen. Weiterhin kann der Werkstoff formbeständig starr, steif elastisch oder plastisch mit vorzugsweise hoher innerer Reibung sein. Formbeständig wird der Kernwerkstoff vor allem dann gewählt werden, wenn eine hohe Schubsteifigkeit für das Lager benötigt wird. In diesem Fall besteht der Kern des Auflagers vorzugsweise aus Stahl. Steif elastisch, also mit steiler Federkennlinie, wird der Auflagerkern vorzugsweise dann ausgebildet, wenn die Schubsteifigkeit des Auflagers einen möglichst weich ansteigenden Verlauf zeigen soll. Als Werkstoffe für solche Kerne kommen insbesondere Elastomere mit einer Härte von mindestens 80 Shore A oder Faserverbundwerkstoffe in Betracht. Plastisch und mit hoher erforderlicher Verformungsarbeit wird der Kern insbesondere dann ausgelegt, wenn für das Auflager in Querrichtung eine hohe Dämpfung erforderlich ist, so beispielsweise bei der Lagerung von Hochbauten in erdbebengefährdeten Gebieten. In diesem Fall besteht der Kern vorzugsweise aus Blei oder einer der Anwendungsspezifikation angepassten Bleilegierung.

Wenn der Kern des Auflagers formbeständig spröde ausgebildet ist, ist er nach einer Ausgestaltung der Erfindung vorzugsweise mit einer Sollbruchstelle versehen, um bei einem unvorhergesehenen Überschreiten der Grenzwerte der einwirkenden Schubkräfte eine anschlagartige Begrenzung des Schubweges dort, wo diese unerwünscht ist und zu katastrophalen Folgen führen kann, in jedem Fall auszuschließen.

Wenn die meist quaderförmig, tonnenförmig oder scheibenförmig ausgebildeten Auflager Schubkräfte aus beliebigen Richtungen aufnehmen müssen, so ist nach einer Ausgestaltung der Erfindung entweder ein einzelner Kern im Auflager vorgesehen, der rotationssymmetrisch um eine Achse ausgebildet ist, die parallel zur Richtung der Auflast steht, oder sind mehrere Kerne, die ebenfalls vorzugsweise rotationssymmetrisch ausgebildet und ihrerseits symmetrisch um die zur Richtung der Auflasteinwirkung parallelen Mittellinie des Auflagers angeordnet sind. Wenn die auf das Auflager einwirkenden Schubkräfte nur eine bestimmte vorgegebene Richtung aufweisen können, so wie dies beispielsweise bei Maschinenlagerungen der Fall ist, dann braucht der Kern des Auflagers nicht rotationssymmetrisch ausgebildet zu sein und brauchen, bei mehreren Kernen, diese nicht rotationssymmetrisch zur geometrischen Form des Auflagers in diesem verteilt angeordnet zu sein, vielmehr ist es in diesem Fall vorzuziehen, den oder die Kerne entweder gleichmäßig oder nach einer vorgegebenen Funktion quer zur Richtung der einwirkenden Schubkräfte zu verteilen. Wenn beispielsweise das Auflager als scheibenförmiger Quader ausgebildet ist, der quer zur Richtung der einwirkenden Schubkräfte angeordnet ist, so kann der Kern des Auflagers beispielsweise als eine Schiene ausgebildet sein, die sich parallel zu den Längskanten des Quaders ungefähr auf dessen Mittellinie quer durch das gesamte Auflager erstreckt. Wenn jedoch beispielsweise in bestimmten Anwendungsfällen mit einem Angriff relativ hoher Schubkräfte an den beiden Seiten eines solchen quaderförmigen Auflagers zu rechnen ist, während im Mittelbereich des ebenfalls wiederum quaderförmig angenommenen Auflagers kaum mit einem nennenswerten Angriff von Schubkräften zu rechnen ist, so kann der Kern beispielsweise in Form von zwei kürzeren Schienen ausgebildet sein, die im Bereich der beiden kurzen Schmalseiten des Quaders angeordnet sind.

Die vorstehenden Beispiele zeigen, daß sowohl die Gestalt des Auflagerkerns an sich als auch dessen Anordnung oder, bei mehreren Kernen, deren Verteilung im Elastomerblock zunächst keine prinzipielle Frage, sondern eine den Anforderungen der Anwendungsspezifikationen folgende Ausgestaltung ist. Entscheidend ist lediglich, daß der Kern biegefest oder biegesteif mit einer abstützenden, im Elastomer einvulkanisierten Bewehrungsbasisplatte oder einem Zwischenblech verbunden ist, das sich zumindest im wesentlichen parallel zum widerlagerseitigen Boden des Auflagers erstreckt.

Nach einer Ausgestaltung der Erfindung ist der im Elastomerblock des Auflagers ausgebildete Hohlraum vorzugsweise hinsichtlich seines Volumens größer als der Kern ausgebildet, und zwar in der Weise, daß bei unbelastetem Auflager der Kern frei in diesen Hohlraum hineinragt, ohne dessen Innenwand zu berühren. Durch diese Ausgestaltung wird erreicht, daß der Kern nicht von vornherein die Federkenndaten des Auflagers mitbestimmt, sondern daß sich das Lager sowohl in Druckrichtung als auch in Schubrichtung zunächst frei und entsprechend der Federkenndaten des Elastomers verformen kann und die die Federkennlinien beeinflussende Wirkung des Kerns erst dann einsetzt, wenn nach einer Anfangsverformung des Elastomerblocks des Auflagers die Innenwand des Hohlraums auf der Oberfläche des Kerns zur Auflage gelangt. Mit anderen Worten, die Versteifung der Federkennlinie, und zwar prinzipiell sowohl in Schubrichtung als auch in Druckrichtung, tritt bei der hier beschriebenen Ausgestaltung der Erfindung also erst dann auf, wenn nach einer Anfangsverformung die Innenwand des Hohlraums im Elastomerblock des Auflagers den Kern zu berühren beginnt. Dabei ist der Abstand der Innenwand des Hohlraums von der Kernoberfläche in Auflastrichtung, das heißt in Druckrichtung, vorzugsweise so gewählt, daß unter bestimmungsgemäßer Auflast zuzüglich eines vorgegebenen Schwingungsweges die Innenwand des Hohlraums die Oberfläche des Kerns nicht berührt, um inhomogene punktuelle Versteifungen des Auflagers in Druckrichtung auszuschließen. Vielmehr wird die Drucksteifigkeit des Lagers in gebräuchlicher Weise neben der Einstellung der Härte des Elastomers primär durch Zwischenbleche oder entsprechende Horizontalflächenarmierungen festgelegt.

In Schubrichtung ist der Abstand zwischen der Kernoberfläche und der Hohlrauminnenwand vorzugsweise ebenfalls so bemessen, daß die Schubversteifung erst nach einer vorgegebenen weichen Schubverformung einsetzt, so daß kleinere Schubkräfte mit kleineren Amplituden zunächst weich abgefedert werden können.

Weiterhin kann der Verlauf der Federkennlinie des Auflagers, ebenfalls prinzipiell wiederum sowohl in Druckrichtung als auch in Schubrichtung, wobei vorliegend jedoch primär die Schubrichtung von Interesse ist, durch die geometrische Formgebung der Wirkflächen des Kerns und des Hohlraums beeinflusst werden. Wenn beispielsweise die Kernoberfläche und die Hohlrauminnenwand in einander gegenüberliegenden Bereichen derart unterschiedlich gekrümmt, und zwar so gekrümmt, daß die Kernoberfläche den kleineren Krümmungsradius und die Hohlrauminnenwand den größeren Krümmungsradius aufweist, ausgebildet sind, wird die tatsächliche Berührungsfläche zwischen diesen beiden Oberflächen zunächst klein sein und wird die Hohlrauminnenwandfläche den Kern erst mit zunehmender Krafteinwirkung und zunehmender Verformung des Elastomers zunehmend mehr umschließen, so daß sich die versteifende Wirkung des Kerns erst weich und allmählich auf die Steifigkeit des Auflagers in Richtung der Krafteinwirkung, primär also in Schubrichtung, auswirken wird. Mit anderen Worten, es wird auf diese Weise ein weicher Verlauf der Federkennlinie erzielt. Werden dagegen die einander gegenüberstehenden Abschnitte der Kernoberfläche und der Hohlrauminnenwand als zueinander parallel verlaufende flächenkomplementäre Flächen mit relativ großem Flächeninhalt ausgebildet, so wird sich die versteifende Wirkung des Kerns bei Flächenberührung zwischen Kern und Elastomer relativ abrupt in der Federkennlinie in Richtung der Krafteinwirkung, hier also wiederum primär in Richtung der Einwirkung der Schubkraft, auswirken.

Der Fachmann erkennt also, daß er neben der Wahl des Kernmaterials auch in der geometrischen Gestaltung der Oberflächen des Kerns und des im Elastomer ausgebildeten Hohlraums ein effektives Mittel zur Gestaltung der Federkennlinie und der Steifigkeit des Auflagers in der Hand hat.

Nach einer weiteren Ausgestaltung ist der bei größerer Ausbildung des im Elastomer ausgebildeten Hohlraums gegenüber dem Kern der verbleibende Zwischenraum zwischen der Kernoberfläche und der Hohlrauminnenwand mit einem Dämpfungsfluid, nämlich mit einem Druckgas oder einer hydraulischen Flüssigkeit, gefüllt, um die Dämpfung des Auflagers, wo dies erforderlich ist, zu verbessern. Vorzugsweise ist der Hohlraum mit einem Silikonöl gefüllt.

Zusätzlich zum Dämpfungsfluid oder alternativ zu diesem kann der zwischen Kernoberfläche und Hohlrauminnenwand verbleibende Zwischenraum entweder nur in Schubrichtung oder gegebenenfalls nur in Druckrichtung oder vollständig mit einem zusätzlichen Federglied, beispielsweise einer Stahlfeder prinzipiell beliebiger Ausgestaltung oder einer Elastomerfeder, überbrückt werden, um so bereits von der ersten Verformung des Auflagers bei einwirkenden Kräften an eine weich einfedernde versteifende Wirkung des Kerns auf die Gesamtcharakteristik des Auflagers zu erreichen. Im Gegensatz zu den vorstehend beschriebenen Ausgestaltungen weist eine solche Kennlinie des Auflagers also von vornherein bereits eine Versteifung auf, und setzt die Kennlinie nicht zunächst mit der unmodifizierten Kennlinie des Auflagerelastomers ein.

Auch aus dieser möglichen Ausgestaltung des Auflagers erkennt der Fachmann die große konstruktive Freiheit bei der Verwirklichung auch sonst unrealisierbarer, vom Einsatzfall vorgegebener Kennlinienverläufe.

Nach einer weiteren Ausgestaltung der Erfindung ist der Hohlraum, der den Kern aufnimmt, vorzugsweise widerlagerseitig offen ausgebildet, und zwar mit einem solchen lichten Durchmesser, daß der Kern unbehindert in den Hohlraum im Auflager einbringbar und aus diesem herausnehmbar ist. Dabei weist der Kern einen Fuß auf, der zumindest im wesentlichen dem Durchmesser der Öffnung des Hohlraums entspricht, und über den der Kern fest mit der Basisplatte verbindbar ist. Dabei kann die Verbindung prinzipiell in beliebiger Weise erfolgen, solange der hergestellte Verbund biegefest oder zumindest in der erforderlichen Weise biegesteif ist. Die Verbindung zwischen Kern und Basisplatte kann bei dieser Ausgestaltung des Auflagers vorzugsweise über ein Schraubgewinde, eine konusförmige Keilverbindung, über eine Flanschverbindung oder ein Bajonett, insbesondere über eine Schraubverbindung erfolgen. Die Schraubverbindung ist dabei vorzugsweise so ausgebildet, daß der Fuß des Kerns ein Außengewinde aufweist, das in ein Innengewinde einschraubbar ist, das in der ensprechenden Öffnung der Basisplatte ausgebildet ist. Bei diesem Verbund wird eine optimale Festigkeit zwischen Kern und Basisplatte erreicht.

Die vorstehend beschriebene Ausgestaltung der Erfindung gewährleistet nicht nur die Möglichkeit eines Austauschs beschädigter oder verschlissener Kerne, sondern erleichtert auch das Füllen des Hohlraums mit einem Dämpfungsfluid und vereinfacht zudem die Herstellung des Auflagers.

Die Erfindung ist im folgenden anhand von Ausführungsbeispielen in Verbindung mit der Zeichnung näher erläutert. Es zeigen:

Fig. 1 ein Ausführungsbeispiel des Auflagers im senkrechten Querschnitt nach I-I in Fig. 2;

Fig. 2 einen horizontalen Querschnitt nach II-II in Fig. 1;

Fig. 3 ein zweites Ausführungsbeispiel des Auflagers in einem der Darstellung der Fig. 1 entsprechenden Schnitt nach III-III in Fig. 4

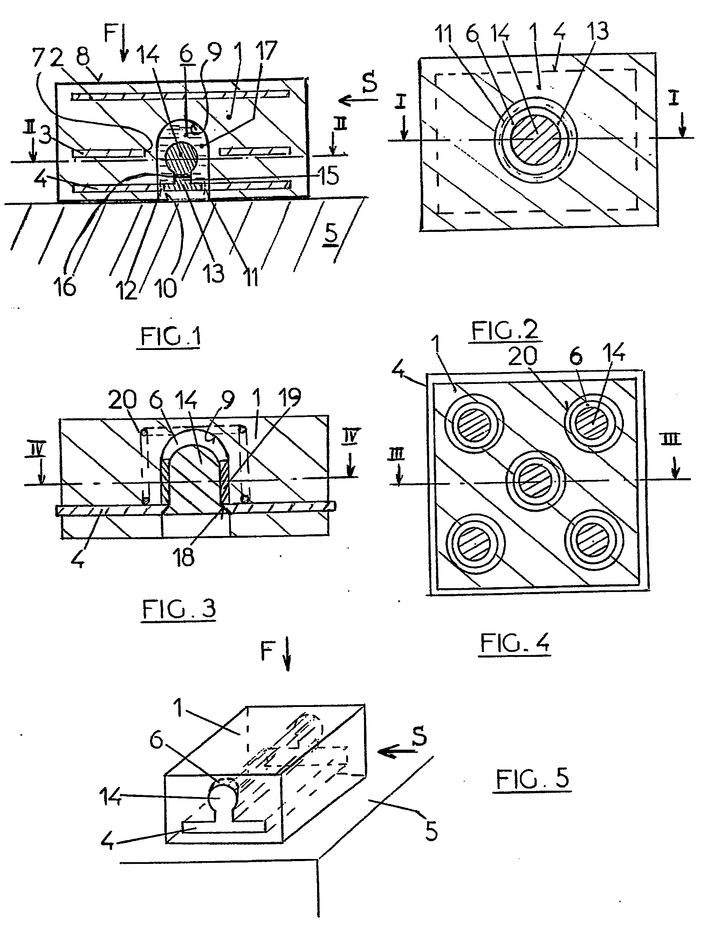

Fig., 4 einen Schnitt nach IV-IV in Fig. 3; und

Fig. 5 ein drittes Ausführungsbeispiel des Auflagers in schematischer perspektivischer Darstellung.

Das in den Fig. 1 und 2 im Schnitt schematisch dargestellte Auflager besteht aus einem Elastomerblock 1, in den zur Verbesserung der Drucksteifigkeit, also zur Verbesserung der Federsteifigkeit in Richtung der einwirkenden Kraft F, in gebräuchlicher Weise Zwischenbleche einvulkanisiert sind, von denen in der schematischen Darstellung in der Fig. 1 ein oberes Zwischenblech 2, ein mittleres Zwischenblech 3 und eine Basisplatte 4 dieser Bewehrung dargestellt sind. Die Bewehrungsplatten oder Zwischenbleche 2, 3, 4 sind vollständig einschließlich ihrer Außenkanten vom Elastomer des Blocks 1 umschlossen und vollständig in dieses einvulkanisiert. Das Auflager liegt auf einem Widerlager 5 auf.

In dem aus dem Elastomerblock 1 und den Bewehrungen 2,3,4 bestehenden Auflager ist ein Hohlraum 6 ausgebildet, der auflastseitig geschlossen und widerlagerseitig offen ist. Der Hohlraum ist zylindrisch mit einer kugelkappenförmigen Kuppel ausgebildet. Über der Kuppel des Hohlraums 6 ist die bis zur auflastseitigen Oberfläche 8 verbleibende Elastomerschicht ausreichend dick, um das oberste Zwischenblech 2 so vollständig einzuschließen, daß dieses weder an der Oberfläche 8 des Auflagers noch im Hohlraum 6 freiliegt. Das, bzw. in einer in Fig. 1 nicht dargestellten Weise, die mittleren Zwischenbleche 3 weisen jeweils eine Öffnung 7 auf, die so groß bemessen ist, daß deren Innenrand nicht in den Hohlraum 6 hineinragt und in der in Fig.1 dargestellten Weise auch nicht in der Innenwandfläche 9 des Hohlraums 6 freiliegt.

Die Basisplatte 4 weist eine Öffnung 10 auf, die in der Innenwand des Kragenabschnitts des Hohlraums 6 freiliegt, bzw. geringfügig nach radial innen vorsteht, und ein Innnengewinde 11 aufweist, in das über ein entsprechendes Außengewinde 12 eine Fußplatte 13 eines Auflagerkerns 14 fest und fluiddicht eingeschraubt ist. Der Kern 14 ist einstückig mit der Fußplatte 13 ausgebildet, besteht aus Stahl und hat die Gestalt einer Kugel, die über einen Hals 15 auf der Fußplatte 13 steht. Im Hals 15 ist als Sollbruchstelle 16 eine ringförmige Schwächung ausgebildet. Der Durchmesser des kugelförmigen Bereichs des Kerns 14 ist kleiner als der Durchmesser des Hohlraums 6 und gleichzeitig auch kleiner als die über der Fußplatte 13 verbleibende Höhe des Hohlraums 6. Mit anderen Worten, der Kern 14 berührt an keiner Stelle die Innenwand 9 des im Elastomerblock 1 ausgebildeten Hohlraums 6.

Der zwischen dem Kern 14 und der Innenwand 9 des Hohlraums 6 verbleibende Zwischenraum ist mit einem dämpfenden Silikonöl 17 gefüllt.

Wirkt auf das in den Fig. 1 und 2 gezeigte Auflager eine Schubkraft S ein, so wird diese zunächst mit der sehr geringen Schubsteifigkeit des Elastomers des Elastomerblocks 1 unter Dämpfung durch die hydraulische Flüssigkeit 17 abgefedert. Wenn die Schubverformungsamplitude größer als der Abstand der Oberfläche des Kerns 14 von der Innenwandfläche 9 des Hohlraums 6 ist, gelangt bei dem hier erörterten Ausführungsbeispiel ein Teil des zylindrischen Abschnitts der Hohlrauminnenwand 9 zur Anlage auf der Kugelfläche des Kerns 14. Während der ersten Berührungsstadien wird sich der Widerstand des über die Basisplatte 4 gegen Verkippen federnd gesicherten Kerns 14 lediglich als geringfügige Vergrößerung der Schubsteifigkeit des Auflagers auswirken. Mit zunehmendem Schub wird jedoch die Kugeloberfläche tiefer in die sich verformende Innenwandfläche 9 des Hohlraums 6 im Elastomerblock 1 eindringen und über die zunehmende Verformungsversteifung in diesem Bereich und die zunehmend größere Wirkfläche, über die der Elastomerblock 1 und der Kern 14 miteinander in Wechselwirkung treten, wird der Einfluß des Kerns 14 auf die Schubsteifigkeit progressiv größer, so daß größeren Schubkräften eine rasch zunehmende Versteifung der Lagerkennlinie in Richtung der einwirkenden Schubkraft auftritt. Mit anderen Worten, ohne Veränderung der Härte des Werkstoffs des Elastomerblocks 1 und ohne eine Beeinträchtigung der Drucksteifigkeit in Richtung der einwirkenden Auflastkraft F wird durch den Kern 14 eine stark progressive Schubversteifung für das Auflager erhalten, wobei überdies Schubverformungsschwingungen durch das eingeschlossene Dämpfungsfluid 17 gedämpft werden.

Wie aus der Fig. 2 ersichtlich, weist das vorstehend beschriebene erste Ausführungsbeispiel der Erfindung einen quaderförmigen Elastomerblock 1 auf, in dem zentral ein einziger Hohlraum 6 mit einem einzigen rotationssymmetrischen Kern 14 ausgebildet bzw. angeordnet sind. Dem gegenüber weist das in den Fig. 3 und 4 schematisch dargestellte, ebenfalls quaderförmige Auflager in zentrosymmetrischer Verteilung fünf Hohlräume auf, in die je ein Kern, der in Richtung der Auflast in sich rotationssymmetrisch geformt ist, hineingreift. Alle fünf Kerne und Hohlräume (siehe Fig. 4) sind untereinander identisch ausgebildet. Dies ist jedoch nicht zwingend erforderlich. Vielmehr können beispielsweise entweder der zentrale Kern oder die umliegenden Kerne stärker als die anderen ausgebildet sein. Auch können, wenn die aufzunehmenden Schubkräfte primär aus nur einer Richtung erwartet werden, die in dieser Richtung vorn liegenden Kerne stärker oder mit anderen Oberflächenkonturen ausgebildet sein. Im einzelnen sind auch diese Ausführungen wesentlich vom geplanten Anwendungsbereich des Auflagers abhängig und als Anpassungen ohne weiteres vom belehrten Fachmann durchzuführen.

Wie aus der Fig. 3 ersichtlich, ist der bei diesem Ausführungsbeispiel gezeigte Elastomerblock 1 nur mit einem einzigen Zwischenblech bewehrt, nämlich der zur Verwirklichung der Erfindung unerläßlichen Basisplatte 4, an der der Kern 14 federnd kippgesichert biegefest befestigt ist, und zwar über einen Klemmkonus 18. Im Gegensatz zu der in Fig. 1 gezeigten Basisplatte steht die in der Fig. 3 gezeigte Basisplatte 4 mit ihren Außenkanten geringfügig über die äußere Seitenfläche des Elastomerblocks 1 über. Ob die Zwischenbleche 2, 3, 4 im einzelnen Ausführungsbeispiel überstehen oder nicht, ist eine reine Frage der Zweckmäßigkeit bei der Herstellung der Auflager und im Rahmen der vorliegenden Erfindung solange ohne Bedeutung, wie sichergestellt ist, daß bei einwirkender Schubkraft die Außenkante des Basisblechs 14 nicht auf der Oberfläche des Widerlagers 5 ungefedert aufsitzt und dadurch die Federcharakteristik des gesamten Auflagers beeinträchtigen würde.

In der in Fig. 3 angedeuteten Weise ist der Zwischenraum zwischen der Innenwandfläche 9 des Hohlraums 6 und dem zylindrischen Abschnitt des flächenkomplementär, aber mit kleineren Abmessungen ausgebildeten und koaxial zum Hohlraum 6 angeordneten Kerns 14 mit einem Federglied, hier einer schematisch angedeuteten Flachfeder, ausgefüllt, so daß die Schubsteifigkeit des Auflagers bereits von der ersten Verformung an um die Kenndaten dieser Flachfeder mäßig versteift wird, ehe sich die signifikante Schubversteifung durch den Kern auszuwirken beginnt. Während also der Beginn der Kennlinie der Schubsteifigkeit bei dem in Fig. 1 gezeigten Ausführungsbeispiel sehr weich verläuft, nämlich nur entsprechend der geringen Schubsteifigkeit des Elastomers 1, verläuft dieser Abschnitt der Schubsteifigkeitskennlinie bei dem in Fig. 3 gezeigten Ausführungsbeispiel bereits deutlich steifer, wiederum jedoch deutlich weicher als er verlaufen würde, wenn die Innenwand 9 des Hohlraums 6 bereits im endspannten Zustand flächenbündig an der zylindrischen Mantelfläche des Kerns 14 anliegen würde.

Sowohl bei dem in Fig. 1 gezeigten Ausführungsbeispiel als auch bei dem in Fig. 3 gezeigten Ausführungsbeispiel ist in jedem Fall der Abstand vom oberen Scheitelpunkt des Kerns zum Scheitel der Hohlraumkuppel so groß, daß bei bestimmungsgemäß belastetem Auflager zuzüglich eines bestimmungsgemäß vorgesehenen Federweges in Druckrichtung keine Berührung zwischen der Innenwandfläche 9 des Hohlraums 6 und der Scheiteloberfläche des Kerns 14 eintritt.

Bei dem in den Fig. 3 und 4 gezeigten Ausführungsbeispiel ist weiterhin jeder der Hohlräume 6 noch einmal durch eine Spiralfeder 20 verfestigt, die als zusätzliche Armierung um den Hohlraum 6 im Elastomer 1 einvulkanisiert ist. Durch diese Maßnahme wird nicht nur die Festigkeit des Elastomers im Hohlraumbereich vergrößert, sondern wird auch die Gleichmäßigkeit der Spannungsverteilung verbessert, die bei einwirkenden Schubkräften vom kern 14 dem Elastomer 1 als Verformungsspannung aufgeprägt wird.

Während die vorstehend beschriebenen Fig. 1 bis 4 zwei Ausführungsbeispiele mit einer symmetrischen Kernkonfiguration und einer symmetrischen Verteilung der Kerne im Elastomerblock 1 des Auflagers zeigen, so daß das Auflager zur Aufnahme von Schubkräften aus prinzipiell beliebiger Richtung ausgelegt ist, ist in der Fig. 5 in schematischer perspektivischer Darstellung ein weiteres Ausführungsbeispiel des Auflagers dargestellt, das zur Aufnahme von Schubkräften aus primär nur einer Richtung ausgelegt ist, nämlich zur Aufnahme von Schubkräften senkrecht zur Längserstreckung des flach quaderförmig ausgebildeten Auflagers. Solche Auflager können beispielsweise zur Lagerung von Maschinen dienen, für die genaue Schwingungsanalysen vorliegen.

Bei dem in Fig. 5 dargestellten Ausführungsbeispiel des Auflagers sind aus Gründen einer einfacheren Darstellung die Zwischenbleche zeichnerisch nicht dargestellt, die bei einer praktischen Ausführung des Lagers in der in Fig. 1 gezeigten Weise auch bei Auflagern der in Fig. 5 gezeigten Art vorhanden sind. Dargestellt ist lediglich die Basisplatte 4, die insgesamt einstückig mit dem Kern 14 ausgebildet ist. Der Kern 14 hat die Form eines langgestreckten, auf der Oberkante einer stegförmigen Rippe liegenden Zylinders, der sich von einer Schmalseite bis zur gegenüberliegenden Schmalseite des quaderförmigen Elastomerblocks 1 des Auflagers erstreckt. In dem hier gezeigten Ausführungsbeispiel ist der Kern 14 in dem Elastomerblock 1 unmittelbar einvulkanisiert, so daß also die Innenwand 9 des Hohlraums 6 in Elastomerblock 1 des Auflagers der Oberfläche des Kerns 14 unmittelbar flächenbündig anliegt. Das in der Fig. 5 gezeigte Auflager zeichnet sich also durch eine vom Ursprung der Kennlinie einsetzende hohe Schubsteifigkeit in Richtung der in Fig. 5 schematischen angedeuteten Schubkraft S aus. Entscheidend ist dabei wiederum, daß die Basisplatte 4 an keiner Stelle einen direkten Kontakt zum Widerlager 5 hat, sondern mit diesem nur über eine mehr oder minder dicke Schicht des Elastomers des Elastomerblocks 1 in Verbindung steht. Wiederum kann durch die Dicke dieser Elastomerzwischenschicht zwischen der Basisplatte 4 und dem Widerlager 5 eine Feinabstimmung der an sich vom Ursprung an relativ steifen Kennlinie der Schubsteifigkeit vorgenommen werden.

Alternativ kann jedoch auch das in der Fig. 5 gezeigte Ausführungsbeispiel des Auflagers in der aus den Fig. 1 bis 4 ersichtlichen Weise dergestalt ausgelegt sein, daß der Hohlraum 6 ein größeres Volumen als der Kern 14 aufweist. Dabei wird es sich, um eine inhomogene Erhöhung der Drucksteifigkeit zu vermeiden, insbesondere in der aus Fig. 5 ersichtlichen Weise um eine Erhöhung des Hohlraums 6 in Richtung der Auflast handeln.

## Patentansprüche

1. Auflager aus einem zur Schubversteifung bewehrten Elastomerblock (1), in dem eine bis gegebenenfalls auf die Außenkanten vollständig vom Elastomer umschlossene starre Bewehrungsbasisplatte (4) einvulkanisiert ist, gekennzeichnet durch mindestens einen im Elastomerblock (1) ausgebildeten, auflastseitig geschlossenen Hohlraum (6), in dem ein biegefest mit der Basisplatte (4) verbundener biegefester oder biegesteifer Kern (14) aufgenommen ist.

2. Auflager nach Anspruch 1, dadurch **gekennzeichnet**, daß der Kern (14) aus einem unter bestimmungsgemäßer Grenzauflast formbeständigen Werkstoff oder Werkstoffverbund, insbesondere Stahl, einem plastischen Werkstoff oder Werkstoffverbund, insbesondere Blei, oder einem elastischen Werkstoff oder Werkstoffverbund, insbesondere einem Elastomer, mit einer Härte von mindestens 80 Shore A, besteht, der eine höhere Schubsteifigkeit als der Elastomerblock (1) aufweist.

3. Auflager nach einem der Ansprüche 1 oder 2, dadurch **gekennzeichnet**, daß der Kern (14), um eine zur Richtung der Auflast (F) parallele Achse rotationssymmetrisch ist.

4. Auflager nach einem der Ansprüche 1 bis 3, dadurch **gekennzeichnet**,

daß der oder die Kerne (14) im Elastomerblock (1) derart angeordnet, verteilt und/oder ausgebildet sind, daß einer aus einer bestimmungsgemäßen Richtung einwirkenden Schubkraft (S) eine quer zu dieser gleichmäßig oder nach vorgegebenem Profil verteilte Schubsteifigkeit entgegenwirkt.

5. Auflager nach einem der Ansprüche 1 bis 4, dadurch **gekennzeichnet**, daß das Volumen des Hohlraums (6) größer als das Volumen des in den Hohlraum hineinragenden Teils des Kerns (14) ist, wobei im unbelasteten Zustand des Lagers die Innenwand (9) des Hohlraums (6) die Oberfläche des Kerns (14) nicht berührt.

6. Auflager nach Anspruch 5, dadurch **gekennzeichnet**, daß der zwischen Kernoberfläche und Hohlrauminnenwand (9) gebildete Zwischenraum mit einem Dämpfungsfluid (17) gefüllt ist.

7. Auflager nach einem der Ansprüche 5 oder 6, dadurch **gekennzeichnet**, daß der Kern (14) und der Elastomerblock (1) in Wirkrichtung der Schubversteifung über ein Federglied (19) miteinander verbunden sind.

8. Auflager nach einem der Ansprüche 1 bis 7, dadurch **gekennzeichnet**, daß die für die Kraftübertragung bestimmten Wirkflächen des oder der Kerne (14) und des Elastomers (1) im Hohlraum (6) räumlich so gestaltet und in der Weise relativ zueinander angeordnet sind, daß die Progression der Schubversteifung einer jeweils anwendungsbedingt vorgegebenen Kennlinie entspricht.

9. Auflager nach einem der Ansprüche 1 bis 8, insbesondere nach Anspruch 5, dadurch **gekennzeichnet**, daß der Hohlraum (6) widerlagerseitig offen und der Kern (14) lösbar (16,12;18) und austauschbar in der Basisplatte (4) befestigt ist.

10. Auflager nach einem der Ansprüche 1 bis 9, dadurch **gekennzeichnet**, daß der Kern (14) eine Sollbruchstelle (16) aufweist.

## Claims

1. Thrust bearing consisting of a reinforced elastomer block (1) braced against shear into which a rigid reinforcing base plate (4) is vulcanized so that said base plate including or excluding the outer edges thereof is completely surrounded by the elastomer, characterized by at least one cavity (6) in the elastomer block (1), whereby said cavity is closed on the side carrying the load and contains a rigid or stiff as to bending core (14) which is rigidly connected to the base plate (4).

2. Thrust bearing according to claim 1, characterized in that the core (14) consists of a material or material composite, in particular steel, which retains its shape when the limit load to be supported is acting thereon, of a ductile material or material composite, in particular lead, or of an elastic material or material composite, in particular an elastomer with a hardness of at least 80 Shore A, having a greater shear stiffness than the elastomer block (1).

3. Thrust bearing according to one of the claims 1 or 2, characterized in that the core (14) has a symmetry of rotation with respect to an axis parallel to the direction of the load to be carried (F).

4. Thrust bearing according to one of the claims 1 to 3, characterized in that the core or the cores (14) are arranged, distributed and/or formed in the elastomer block (1) in such a way that a shear force (S) which acts from the intended direction, is counteracted by a shear stiffness being distributed transversely to the former shear force (S) in a uniform manner or by a given profile.

5. Thrust bearing according to one of the claims 1 to 4, characterized in that the volume of the cavity (6) is greater than the volume of said part of the core (14) which projects into the cavity, whereby the inner wall (9) of the cavity (6) does not touch the surface of the core (14) when the thrust bearing is without load.

6. Thrust bearing according to claim 5, characterized in that the interstice formed between the core surface and interior wall (9) of the cavity is filled with a damping fluid (17).

7. Thrust bearing according to one of the claims 5 or 6, characterized in that the core (14) and the elastomer block (1) are connected with each other in the acting direction of the shear bracing by a spring-member (19).

8. Thrust bearing according to one of the claims 1 to 7, characterized in that the acting areas of the core or cores (14) and of the elastomer (1) in the cavity (6) are spatially shaped in such a way and are arranged in such a manner with respect to each other that the progression of the shear bracing corresponds to a predetermined characteristic curve which is adapted to the desired application.

9. Thrust bearing according to one of the claims 1 to 8, in particular according to claim 5, characterized in that the cavity (6) is open at the side of the supporting base and that the core (14) is mounted in a removable (16, 12; 18) and replaceable manner in the base plate (4).

10. Thrust bearing according to one of the claims 1 to 9, characterized in that the core (14) has a predetermined breaking point (16).

## Revendications

1. Support réalisé à partir d'un bloc élastomère (1), armé pour amortir les poussées latérales, dans lequel est vulcanisée une plaque de base, servant d'armature (4), rigide et complètement enserrée d'élastomère, y compris, le cas échéant, jusqu'aux arêtes extérieures, caractérisé par au moins un espace creux (6) formé dans le bloc élastomère (1), fermé du côté de l'application de la charge, dans lequel est pris un noyau (14) relié, de façon à résister à la flexion, avec la plaque de base (4) et résistant lui-même à la flexion d'une manière rigide ou en l'amortissant.

2. Support suivant la revendication 1, caractérisé en ce que le noyau (14) est constitué d'un matériau ou d'un matériau composite, en particulier d'acier, résistant à la déformation sous une charge limite pré-définie, ou d'un matériau ou d'un matériau composite plastique, en particulier de plomb, ou d'un matériau ou d'un matériau composite élastique, en particulier d'élastomère, comportant une dureté d'au moins 80 Shore A, noyau qui présente une résistance au cisaillement plus élevée que le bloc élastomère (1).

3. Support suivant la revendication 1 ou la revendication 2, caractérisé en ce que le noyau (14) présente une symétrie de révolution autour d'un axe parallèle à la direction de la charge (F).

4. Support suivant l'une quelconque des revendications 1 à 3, caractérisé en ce que le ou les noyaux (14), dans le bloc d'élastomère (1), sont disposés, répartis et/ou constitués de telle manière qu'une résistance au cisaillement répartie, perpendiculairement à la force de poussée latérale (S), d'une façon régulière ou suivant un profil donné à l'avance, s'oppose à cette force de poussée latérale (S) agissant suivant une direction prédéterminée.

5. Support suivant l'une quelconque des revendications 1 à 4, caractérisé en ce que le volume de l'espace creux (6) est plus grand que le volume de la partie du noyau (14) faisant saillie dans l'espace creux, la paroi interne (9) de l'espace creux (6) n'étant pas en contact avec la surface externe du noyau (14) quand le support n'est pas sous charge.

6. Support suivant la revendication 5, caractérisé en ce que le volume intercalaire formé entre la surface externe du noyau et la paroi interne (9) de l'espace creux est rempli avec un fluide amortisseur (17).

7. Support suivant l'une des revendications 5 ou 6, caractérisé en ce que le noyau (14) et le bloc élastomère (1) sont reliés entre eux, suivant la ligne d'action d'amortissement de la poussée latérale, par un élément faisant ressort (19).

8. Support suivant l'une quelconque des revendications 1 à 7, caractérisé en ce que les surfaces actives du ou des noyaux (14) et du bloc élastomère (1) destinées à reprendre les efforts sont, dans le volume creux (6), disposées, dans l'espace, et relativement les unes par rapport aux autres, de telle façon que la progression de l'amortissement de la poussée latérale est conforme à une ligne caractéristique chaque fois prédéterminée en fonction de l'utilisation.

9. Support suivant l'une quelconque des revendications 1 à 8, en particulier suivant la revendication 5, caractérisé en ce que l'espace creux (6) est ouvert du côté de l'appui et en ce que le noyau (14) est fixé dans la plaque de base (4) de façon à pouvoir être démonté (16, 12; 18) et échangé.

10. Support suivant l'une quelconque des revendications 1 à 9, caractérisé en ce que le noyau (14) présente un point de rupture prédéterminé (16).

F↓

72  8  F↓  14  6  9  1  17

II  3

4

16  12  10  13  11

**FIG.1**

II  15

S←

5

11  6  14  1  4  13

I  I

**FIG.2**

20  6  14  9  1  19

IV  IV

4  18

**FIG.3**

1  20  6  14

4

III  III

**FIG.4**

F↓

1

6

14

4

S←

5

**FIG.5**